**Europäisches Patentamt**

**European Patent Office**

**Office européen des brevets**

(19)

(11) Veröffentlichungsnummer : **0 502 965 B1**

(12) **EUROPÄISCHE PATENTSCHRIFT**

(45) Veröffentlichungstag der Patentschrift :
22.06.94 Patentblatt 94/25

(51) Int. Cl.$^5$ : **G02B 26/10, H04N 1/18**

(21) Anmeldenummer : **91900798.9**

(22) Anmeldetag : **30.11.90**

(86) Internationale Anmeldenummer :
**PCT/EP90/02064**

(87) Internationale Veröffentlichungsnummer :
**WO 91/08504 13.06.91 Gazette 91/13**

(54) **OPTISCHES POSITIONIERUNGSSYSTEM FÜR MINDESTENS EINEN BILDPUNKT.**

(30) Priorität : **30.11.89 DE 3939551**

(43) Veröffentlichungstag der Anmeldung :
**16.09.92 Patentblatt 92/38**

(45) Bekanntmachung des Hinweises auf die
Patenterteilung :
**22.06.94 Patentblatt 94/25**

(84) Benannte Vertragsstaaten :
**AT CH DE FR GB LI**

(56) Entgegenhaltungen :
**EP-A- 0 139 850**
**EP-A- 0 277 883**
**DE-A- 2 443 379**

(56) Entgegenhaltungen :
**US-A-46 813 94**
**IBM Technical Disclosure Bulletin, vol. 30, no.
7, December 1987, IBM Corp., (Armonk, New
York, US), "Dual laser reflective scanner", pp
6-7.**
**Patent Abstracts of Japan, vol. 10, no. 86
(P-443)(2143), 4 April 1986 & JP A 60222817**

(73) Patentinhaber : **Linotype-Hell
Aktiengesellschaft
Postfach 56 60,
Mergenthaler Allee 55-75
D-65731 Eschborn (DE)**

(72) Erfinder : **HÄRIG, Thomas
Im Hirtengarten 5
D-6239 Eppstein (DE)**

EP 0 502 965 B1

**Beschreibung**

Die Erfindung betrifft ein optisches Positionierungssystem für mindestens zwei Bildpunkte nach dem Oberbegriff des Anspruchs 1.

Bildpunktpositioniersysteme sind für vielfältige Anwendungen und in vielen Ausführungen bekannt. Eine bedeutende Gruppe dient der zeilenweisen Abtastung von Flächen, entweder zum Erfassen oder zum Schreiben von Informationen. Dominant ist hierbei ein kontinuierlich rotierendes mechanisches Lichtablenkelement.

Um die Genauigkeit der mechanischen Ablenkbewegung zu erhöhen, ist die Kombination einer bestimmten Klasse von mechanischen Ablenksystemen mit einer zusätzlichen Ablenkmöglichkeit über akustooptische Deflektoren bekannt (DE-OS 24 43 379, US-PS 4 279 472). In diese Klasse mechanischer Ablenksysteme fallen Scansysteme wie Schwingspiegel oder polygonräder, bei denen die Ablenkfläche nur einen kleinen Winkel zum auf das Ablenkelement fallenden Strahlenbündel hat: Nur für solche Systeme wird nämlich die Richtung einer in der Bildebene oder an äquivalenter Stelle detektierten Fehlweisung unabhängig von der Ablenkstellung auf den im Vorscansystem liegenden akustooptischen Deflektor übertragen.

Dies ist jedoch z.B. für Scansysteme mit Spiegelflächen unter 45 Grad zur Drehachse oder prismenablenkern, beide parallel zur Drehachse beaufschlagt, nicht der Fall.

Ferner bekannt sind Systeme, die Lichtbündel unterschiedlicher Wellenlänge selektieren und gleichzeitig oder sequentiell zur Abtastung nutzen können z.B JP-A-222 817, die dem Oberbegriff des Anspruchs 1) entspricht.

Bei einem ferner zum Stand der Technik gehörenden Laserdrucker wird das von einem abstimmbaren Halbleiterlaser ausgehende Strahlenbündel mit einer Abtastbewegung entlang einer geraden Abtastlinie über ein lichtempfindliches Aufzeichnungsmaterial auf der Aufzeichnungstrommel des Laserdruckers mittels eines Hologrammoduls geführt (EP-OS 0 277 883). In den Strahlengang zwischen dem Hologrammodul und der Abtastebene ist ferner eine fO-Linse eingefügt, um das Strahlenbündel in der Abtastebene zu fokussieren. Der Hologrammkörper ist ein transparentes Vieleck, auf dem eine gewünschte Anzahl von Hologramm-Gittern angeordnet sind, die von dem Laserstrahlenbündel beaufschlagt werden. In einem einfachsten Fall kann statt des Hologrammoduls eine Hologrammlinse vorgesehen sein. Das Hologrammodul und die Hologrammlinse stellen lichtablenkende, Wellenlängendispersive Elemente dar, d.h. Elemente, deren Diffraktion (Beugung) im wesentlichen von der Lichtwellenlänge abhängt. Damit wird eine nicht mechanische Ablenkung des Strahlenbündels erreicht, die mit sehr hohen Geschwindigkeiten erfolgen kann. - Bekannt sind auch Varianten dieses Positionierungssystems, in denen das Hologrammodul gleichzeitig mit mehreren Strahlenbündeln beaufschlagt wird, die beispielsweise von drei steuerbaren Lasern ausgehen. Die Auftreffwinkel der drei Strahlenbündel auf dem Hologrammodul können dabei entweder identisch oder voneinander unterschiedlich sein.

Nachteilig ist bei allen diesen bekannten Ausführungsformen mit einem durchstimmbaren Laser und einem holographischen Modul bzw. Deflektionselement, daß sich nur eine recht begrenzte Anzahl von Bildpunktpositionen mit hoher Genauigkeit einstellen läßt, die insbesondere zur Herstellung typographisch anspruchsvollen Satzes aus Bildpunkten (Pixeln) nicht ausreicht. Die erzielbare Anzahl von Bildpunktpositionen ist bei einem optischen Positionierungssystem der einschlägigen Gattung grundsätzlich bestimmt durch den spektralen Durchstimmbereich der Lichtquelle und der erforderlichen spektralen Breite für eine genau reproduzierbare Wellenlänge. Beispielsweise ist bei einem spektralen Durchstimmbereich von Laserdioden, der etwa 10 nm beträgt und bei einer typischen Temperaturabhängigkeit der Wellenlänge von 0,1 - 0,3 nm/K selbst bei einer Temperaturstabilisierung auf 0,1 K nur eine Anzahl von höchstens 1.000 exakten Bildpositionen zu erzielen, während jedoch bei Abtastern für die graphische Industrie typisch viele 10.000 Positionen aufzulösen sind.

Auch die zum Stand der Technik gehörende Bildpunktpositionierung mit Hilfe akusto-optischer Deflektoren ohne mechanische Bewegung nur durch Variation einer Schallfrequenz, die in dem akusto-optischen Deflektor erzeugt wird, hat die Beschränkung, daß der Deflektor nur eine verhältnismäßig geringe Anzahl von Bildpositionen auflösen und nur kleine Ablenkwinkel realisieren kann.

Große nutzbare Ablenkwinkel bei hoher Positionierungsgenauigkeit können bekannte opto-mechanische Positionierungssysteme aufweisen, bei denen das lichtablenkende Element insbesondere um eine Drehachse rotiert. Insbesondere sind Polygonspiegel mit Flächen, die unter 45° zur Drehachse angeordnet sind, vorteilhaft, da die damit erzielte 1:1 Umsetzung von Drehwinkel in Scanwinkel eine gute Positioniergenauigkeit erlaubt. Ablenkprismen mit 90°-Umlenkung (wie die voranstehenden Polygonspiegel) sind außerdem unempfindlich gegen Störungen der idealen Spiegelposition, z.B. durch Lagerwobbeln oder durch Vibration. Bemerkenswert kippunempfindlich ist ein rotierendes Pentaprisma mit einem nachfolgenden Abtastobjektiv.

In vielen Bereichen, insbesondere in der graphischen Industrie, besteht bei den geschilderten optisch-mechanischen Ablenkern, welche mindestens ein Strahlenbündel über die Bildebene oder abzutastende Fläche im Abtastbetrieb bewegen, der Wunsch nach Erhöhung der nutzbaren Abtastgeschwindigkeit. Diese Erhöhung kann generell dadurch erzielt werden, daß nicht nur mit einem Bildpunkt, sondern mit mehreren, vorzugweise in gleichbleibendem Abstand zueinander geführten Bildpunkten abgetastet wird. Bei den bevorzugten opto-mechanischen Abtastsystemen, die mit einem Polygonspiegel mit Flächen unter 45° zur Drehachse oder mit wenigstens einem Prisma aufgebaut werden und die im Idealfall mit einem in der Drehachse liegenden Strahlenbündel beaufschlagt werden, ist es nicht möglich, mehrere Strahlenbündel parallel zueinander und damit zum Teil zwangsläufig außerhalb der Drehachse liegend zu erweitern, da eine Rotation des ablenkenden Elements oder Deflektors sich in einer Rotation der Bildpunkte auswirkt, soweit diese nicht in der optischen Achse bzw. der Drehachse liegen. Wären in einem Bereich der Abtastlinie mehrere Bildpunkte auf einer zur Abtastrichtung rechtwinkligen Linie angeordnet, so würde diese Linie sich entsprechend dem jeweiligen Drehwinkel zu der Abtastlinie hin neigen.

Daraus ergibt sich die der vorliegenden Erfindung zugrunde liegende Aufgabenstellung, ein optisches Positionierungssystem der eingangs genannten Gattung so weiterzubilden, daß bei hoher Auflösung einer großen Anzahl von Bildpositionen durch gleichzeitige Positionierung von mindestens zwei Bildpunkten die Abtastgeschwindigkeit um Faktoren verbessert wird.

Diese Aufgabe wird erfindungsgemäß durch die in dem kennzeichnenden Teil des Anspruchs 1 angegebene Erfindung gelöst.

Danach weist das Positionierungssystem zur gleichzeitigen Positionierung mehrerer Bildpunkte eine entsprechende, d.h. gleiche Anzahl Lichtquellen unterschiedlicher einstellbarer Wellenlängen auf. Die von diesen Lichtquellen ausgehenden Strahlenbündel werden mittels des zweiten lichtablenkenden Elements, welches auch hier in erster Näherung Wellenlängenunabhängig ist, in einer gemeinsamen Ebene verlaufend ausgelenkt.

Ein mit einem weiteren optischen Element aufgebautes Positionierungssystem hat die vorteilhaften Merkmale, daß zur gleichzeitigen Positionierung mehrerer Bildpunkte eine entsprechende Anzahl Lichtquellen unterschiedlicher, einstellbarer Wellenlängen vorgesehen sind, daß von den Lichtquellen ausgehende Strahlenbündel mittels des zweiten strahlablenkenden Elements in einer gemeinsamen Ebene verlaufend abgelenkt werden und wenigstens ein zusätzliches optisches Element beaufschlagen und daß im Ausgangsstrahlengang des zusätzlichen optischen Elements wenigstens das eine Wellenlängen-dispersive Element so angeordnet ist, daß mit ihm die Strahlenbündel unterschiedlicher Wellenlänge vorzugsweise in einer anderen Richtung als der zweiten Ablenkrichtung voneinander getrennt werden.

Das zusätzliche optische Element ist vorteilhaft das typischerweise aufwendige Objektiv zur Fokussierung der Bildpunkte, das dadurch nur einmal ausgeführt werden muß. Nach Anspruch 3 dient als zusätzliches optisches Element ein Objektiv zum gemeinsamen Fokussieren der Bildpunkte, welches nach dem zweiten Ablenker angeordnet ist und in deren Meridionalebene die Strahlenbündel durch Bewegung des zweiten, Wellenlängenunabhängigen Ablenkers im wesentlichen verlaufen. Gerade für ein solches Scan-Objektiv, das für außeraxiale Nutzung besonders aufwendig ausgeführt werden muß, ist eine gemeinsame Beaufschlagung durch alle Strahlenbündel vorteilhaft.

In dem erfindungsgemäßen Positionierungssystem wird die Position des Bildpunkts - abgesehen von der Ablenkung des Bildpunkts durch das zweite lichtablenkende Element, welches Wellenlängen-unabhängig ist - bestimmt durch die relative Anordnung der Lichtquelle zu dem Wellenlängen-dispersiven Element sowie durch die von der Lichtquelle emittierte Wellenlänge. Der erreichbare Positionierbereich wird dabei begrenzt durch den Teil des optischen Systems zwischen dem Bildpunkt und dem Wellenlängen-dispersiven Element, durch die Dispersion des Elements sowie durch den Wellenlängenbereich, über den die Lichtquelle durchgestimmt werden kann. Die voranstehenden Parameter lassen sich in weiten Grenzen anwendungsabhängig wählen.

Als geeignete Lichtquellen einstellbarer Wellenlänge können breitbandig oder in multiplen Linien emittierende Lampen mit nachgeschalteten variablen Monochromatoren, breitbandig durchstimmbare Laser, wie Farbstofflaser oder Festkörperlaser mit Cr- oder Ti-Dotierung, Halbleiterlaser oder auch Gaslaser mit multiplen Emissionslinien verwendet werden.

Als Beispiel soll die bisherige Beschreibung erläutert werden. Der mechanische, zweite Ablenker sei ein rotierender Spiegel- oder Prismenablenker mit einer typischen Anzahl von 15.000 auflösbaren Punkten bei 20 μm Punktabstand bzw. 30.000 Punkten bei 10 μm Punktabstand und einer Genauigkeit im Bereich einiger μm bis hinunter zu einigen Zehntelμm. Für den ersten Ablenker sei die Wellenlänge der Lichtquelle um 10 nm zu variieren, und die Schrittgröße für sicher reproduzierbare Variation sei 0.1 nm. Dann ergeben sich 100 ansprechbare Positionen. Die Dispersion des vorgesehenen Elementes sei so auf die nachfolgende Optik abgestimmt, daß bei 10 nm Wellenlängen-Variation sich der Bildpunkt um 20 μm verschiebt. Das entspricht einer räumlichen Auflösung von 0.2 μm pro Wellenlängen-Varianz von 0.1 nm. Damit liegt hier die Auflösung des ersten Ablenksystems um mehr als eine Größenordnung höher als die des zweiten Ablenksystems, jedoch bei weit stärker eingeengtem Scanbereich. In der Kombination jedoch können die Stärken beider Systeme vereint werden.

In der weiteren Ausführung von Beispielen werde das dispersive Element mit einem im wesentlichen parallelen Strahlenbündel beaufschlagt und befinde sich vor einer Fokussieroptik.

Wird als dispersives Element ein Gitter mit Gitterperiode D verwendet, so ergibt sich für eine Wellenlänge λ hunter Einstellung der Bragg-Bedingung

$$D \sin w(\lambda) = \lambda, \quad (Gl.1)$$

wobei w der Winkel zur Gitternormalen ist und somit der halbe Winkel zwischen der nullten und ersten Beugungsordnung des Gitters unter Bragg-Inzidenz.

Sei D = 0.2 mm und sei die mittlere Wellenlänge der variablen Lichtquelle $\lambda_o$= 800 nm, so ergibt sich $w(\lambda_o)$ = 0.2292 Grad, oder in anderer Notation gleich 4 mrad. Für die benachbarte Wellenlängen λ ergibt sich in guter Näherung

$$\Delta w = \Delta\lambda w(\lambda_o)/\lambda_o = 0.005 \text{ mrad/nm} \quad (Gl.2)$$

mit $\Delta\lambda = \lambda-\lambda_o$.

Mit einer Brennweite f der verwendeten, dem Gitter nachfolgenden Fokussieroptik von f = 400 mm eine Auslenkung in der Bildebene von

$$\Delta y = f \tan(\Delta w), \quad (Gl.3)$$

damit alson $\Delta y$ = 2 μm pro$\Delta\lambda$ = 1 nm, also
bei 10 nm Wellenlängenänderung eine Auslenkung von 20 μm.

Wird als dispersives Element eine nicht senkrecht durchtretende Grenzfläche eines Prismas in Luft verwendet, so ergibt sich bei der Annahme von BK7 als Material des Prismas ein Brechungsindex von etwa n = 1.511 und eine Dispersion von $\Delta n/\Delta\lambda$ = 2 x $10^{-5}$/nm bei der zentralen Wellenlänge λ= 780 nm. Für einen inzidenten Winkel des Strahlenbündels von $w_i$ = 14 Grad zur Austrittsfläche ergibt sich bei λ= 780 nm für den Austrittswinkellenkwinkel $w_a$ gemäß dem Brechungsgesetz

$$n \sin(w_i) = \sin(w_a), \quad (Gl.4)$$

wobei schon der Brechungsindex der Luft mit 1 benutzt wurde, zu:
$w_a$(780 nm) = arc sin(1.511 sin 14 Grad) = 21.4411 Grad.

Für λ = 770 nm ergibt sich
$w_a$ (770 nm) = arc sin(1.5112 sin 14 Grad) = 21.4440 Grad.
Die Winkeldifferenz transformiert sich über die Fokussieroptik von f = 400 mm gemäß Gl.3 zu abgerundet $\Delta y$ = 20 μm in der Bildebene. Damit ist ebenfalls bei 10 μm Wellenlängenänderung die im oberen Beispiel angegebene Positionsverschiebung erreicht.

Zur Vergrößerung des Positionierbereichs außerhalb der zweiten, d.h. der Hauptablenkrichtung, können mehrere Wellenlängen-dispersive Elemente im Strahlengang hintereinander geschaltet werden oder ein solches Element kann nach zusätzlicher konstanter Umlenkung des Strahlengangs mehrfach durchlaufen werden. Die Positionierung des Bildpunkts außerhalb der zweiten, Hauptablenkeinrichtung durch Wellenlängensteuerung der Lichtquelle in Verbindung mit wenigstens einem Wellenlängen-dispersiven Element ist besonders für kleine Positionsänderungen bei hoher Präzision der Positionierung als additives Stellglied in einem opto-mechanischen Abtastsystem geeignet.

In einer Abwandlung des Prinzips nach Anspruch 1 ist es möglich, mehrere Strahlenbündel gleichzeitg in der abgetasteten Fläche bzw. Bildfläche zu einem Bildpunkt mittels des Wellenlängen-dispersiven Elements auch dann vereinen, wenn die Strahlenbündel bis zu dem Wellenlängen-dispersiven Element separat verlaufen. Zum Zusammenführen der Bildpunkte verschiedener Quellen können zusätzliche mechanische Mittel zur Grobjustage vorgesehen sein, zu der zusätzlich eine Feinjustage durch Wahl der geeigneten Wellenlängen der Lichtquellen gehört. Anwendungsbeispiele sind Abtastscanner, die mit Lichtquellen verschiedener Spektralbereiche jeweils einen Bildpunkt abtasten oder Positionierungseinrichtungen, die eine hohe Energie in einem Punkt vereinen sollen und deshalb mehrere Lichtquellen in diesem Punkt abbilden.

In dem in dem Anspruch 1 angegebenen Positionierungssystem, bei dem jedoch die Bildpunkte verschiedener Quellen vorbestimmte separate Positionen absolut wie auch relativ zueinander einnehmen sollen, kann die relative Positionierung ebenfalls durch Einstellung geeigneter Wellenlängen der Lichtquellen erreicht werden. Diese relativen Positionen können auch zeitlich durch Steuerung der Lichtwellenlängen verändert werden ohne die Anforderungen an die mechanische Ausführung und die Stabilität des Positionierungssystems durch Verwendung zusätzlicher mechanischer Stellelemente zu erhöhen.

Wie erörtert, kann das zweite lichtablenkende Element, welches die betriebsmäßige Hauptablenkung hervorruft, Bestandteil eines opto-mechanischen Ablenkers sein. Dieser ist besonders dann vorteilhaft, wenn es sich um Polygonspiegelflächen handelt, die unter 45° zur Drehachse angeordnet sind oder um ein Prisma, insbesondere Pentaprisma, bei dem die Reflexion an einigen Prismenflächen genutzt wird und das weitgehend, zusammen mit einem nachfolgenden Objektiv, wobbelkompensierend wirkt.

Für einige Anwendungen vorteilhaft ist das Wellenlängendispersive Element mit dem bewegten, insbesondere rotierenden Teil des optisch-mechanischen Ablenkers fest verbunden. Der Vorteil besteht insbesondere darin, daß die wirksame Fläche des Wellenlängen-dispersiven Elements damit klein gehalten werden kann und nicht den betriebsmäßigen Ablenkwinkel zu überdecken braucht, und die Inzidenz auf das dispersive Element kann besser konstant gehalten werden, unabhängig vom Drehwinkel. Vorteilhaft kann als Lichtquelle steuerbarer Wellenlänge ein Laser verwendet werden.

Nach Anspruch 9 ist in einem optischen Positionierungssystem für zwei Bildpunkte, die gleichzeitig mittels je eines Strahlenbündels, welches von je einer spektral schmalbandigen Lichtquelle ausgeht, sowie mittels mindestens insgesamt eines Wellenlängen-dispersiven Elements, welches die Strahlenbündel beaufschlagen, erzeugt werden, jeweils die Lichtquelle einer diskreten Wellenlänge mit den von dem Lichtbündel, welches von dieser Lichtquelle ausgeht, beaufschlagten Wellenlängendispersiven Elementen so kombiniert, daß sich die gewünschte Bildpunktposition einstellt. Das optische Positionierungssystem nach Anspruch 9 bezieht sich also auf eine Fertigungsstufe, in der für das jeweilige System geeignete Kombinationen von Lichtquellen mit diskreten, nicht variablen Wellenlängen sowie von in Ausführung und Anordnung angepaßten Wellenlängen-dispersiven Elementen gewählt werden. Insbesondere können so Lichtquellen mit diskreten, durch den Fertigungsprozeß bedingten oder bestimmbaren Emissionswellenlängen, wie Halbleiterlaserdioden, selektiert werden. Dazu wird z.B. ein passendes Wellenlängen-dispersives Element aus einer Anzahl ähnlicher Wellenlängen-dispersiver Elemente mit leicht unterschiedlicher Dispersion ausgewählt und mit einer oder einem Paar der jeweiligen Halbleiterlaserdioden kombiniert. Bei mehr als zwei Bildpunkten ist ab der dritten Quelle je ein weiteres, separat beaufschlagtes dispersives Element vorzusehen, oder aber vorteilhaft je eine Quelle variabler Wellenlänge, wie in Anspruch 2 beschrieben.

Als Wellenlängen-dispersives Element kann allgemein vorteilhaft eine ebene Gitterstruktur verwendet werden. Dies schließt die Verwendung einer akusto-optisch erzeugten Gitterstruktur mit ein.

Diese kann insbesondere nach Anspruch 11 durch wenigstens ein Hologramm realisiert sein.

Das Wellenlängen-dispersive Element kann aber auch konventionell nach Anspruch 12 aus mindestens einem optischen Element bestehen, in welches ein Strahlenbündel außerhalb seiner optischen Achse eindringt. Dabei kann es sich um eine Linse handeln, deren prismatische Wirkung bzw. chromatische Aberration außerhalb der Hauptachse genutzt wird. So kann ein zusätzliches Wellenlängen-dispersives Element in dem optischen Positionierungssystem entfallen.

Nach Anspruch 13 kann das Wellenlängen-dispersive Element mindestens eine im wesentlichen plane Grenzfläche zwischen zwei Medien mit unterschiedlichen Brechungsindizes aufweisen, die schräg zur Achse eines beaufschlagenden Strahlenbündels orientiert ist. Dies schließt die Verwendung eines Prismas mit ein.

Im einzelnen wird zu verschiedenen Ausführungen Wellenlängendispersiver Elemente auf die erwähnte EP-OS 277 883 hingewiesen.

Die Erfindung wird im folgenden anhand einer Zeichnung mit vier Figuren erläutert. Es zeigen:

Fig. 1    eine schaubildliche Darstellung eines optischen Positionierungssystems mit zwei Lichtquellen, in dem ein Strahlengang zweifach abgelenkt wird,

Fig. 2    schematisch einen Teil eines optischen Positionierungssystems, in dem mehrere Strahlenbündel in einem Bildpunkt vereinigt werden, in einer Draufsicht oder Seitenansicht,

Fig. 3    ein optisches Positionierungssystem mit einem spiegelnden Deflektor, der im wesentlichen in der Rotationsachse von dem Strahlenbündel beaufschlagt wird, in einer schaubildlichen Darstellung und

Fig. 4    vergrößert in einer Seitenansicht herausgezeichnet, das lichtablenkende Element.

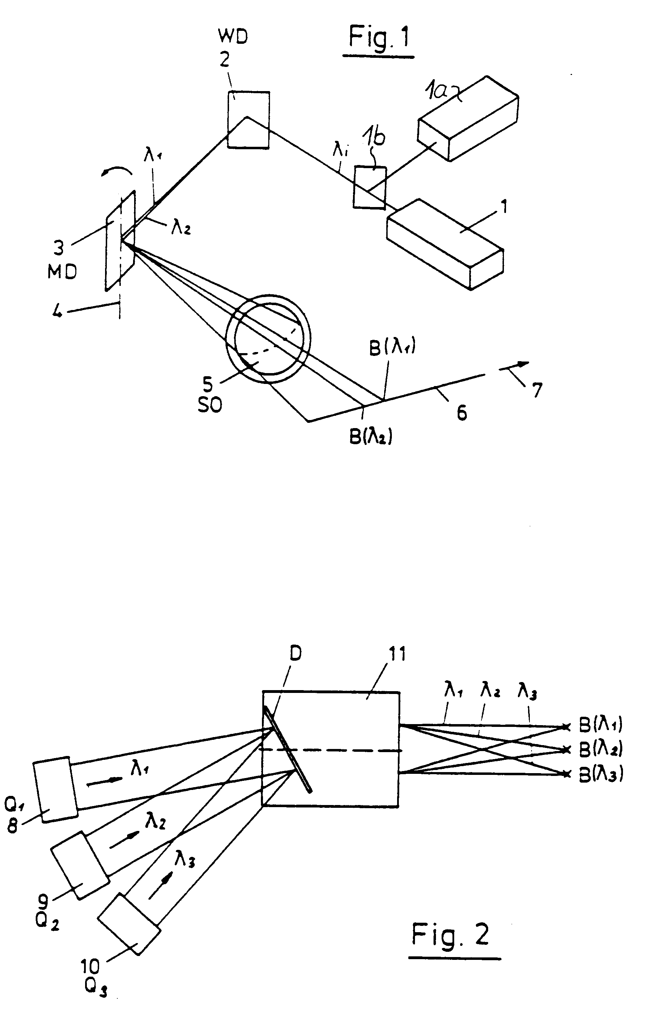

In Fig. 1 ist ein optisches Positionierungssystem mit zwei schmalbandigen Lichtquellen 1, 1a steuerbarer Wellenlänge dargestellt. Die von ihnen ausgehenden Strahlenbündel werden in einem teildurchlässigen Spiegel 1b vereinigt. In diesem Strahlengang sind ein Wellenlängen-dispersives Element 2, ein optisch-mechanischer Ablenker 3, der um eine Drehachse 4 drehbar ist, sowie ein Abtastobjektiv 5 angeordnet. Das von den Lichtquellen emittierte Licht wird durch das Abtastobjektiv 5 in Bildpunkten entlang einer Abtastlinie 6 abgebildet. Die Abtastbewegung 7 in der Abtastlinie 6 geht auf das Drehen des optisch-mechanischen Ablenkers 3 zurück und wird auch als betriebsmäßige oder zweite Abtastbewegung bezeichnet. Die Abtastlinie 6 wird zum einen bei einer Lichtwellenlänge $\lambda_1$ abgetastet. Dieser Lichtwellenlänge entspricht beispielsweise eine momentane Bildpunktposition $B(\lambda_1)$. Da an der Lichtquelle 1a eine andere Wellenlänge eingestellt ist, liegt zum anderen eine Bildposition, hervorgerufen durch das stationäre Wellenlängen-dispersive Element 2, bei $B(\lambda_2)$ vor. In Fig. 1 ist der Sonderfall dargestellt worden, daß beide Bildpunkte $B(\lambda_1)$ und $B(\lambda_2)$ in der gleichen Abtastlinie 6 liegen. Allgemein kann jedoch in anderen Ausführungsformen die erste Ablenkbewegung, die durch die Änderung der Wellenlänge der Lichtquelle 1 hervorgerufen wird, in jeder Richtung zu der zweiten Ablenkbewegung erfolgen.

In dem Positionierungssystem gemäß Fig. 2 sind drei Lichtquellen, die unterschiedliche Wellenlangen $\lambda_1$, $\lambda_2$ und $\lambda_3$ emittieren, mit 8, 9 und 10 bezeichnet. Die Strahlenbündel, die von diesen Lichtquellen ausgehen, treffen sich in einem Wellenlängen-dispersiven Element 11, durch welches sie im Abstand zueinander als Bild-

punkte B($\lambda_1$), B($\lambda_2$) und B($\lambda_3$) auf einer nicht dargestellten Abtastfläche positioniert werden. Die relative Lage der Bildpunkte B($\lambda_1$), B($\lambda_2$), B($\lambda_3$) kann durch Einstellung der Wellenlänge der Lichtquellen 8 - 10 verändert werden. Durch einen mechanischen Deflektor, der zur Vereinfachung nicht dargestellt ist, können die drei Bildpunkte in der dargestellten Lage neben- bzw. übereinander entlang der Abtastlinie bewegt werden.

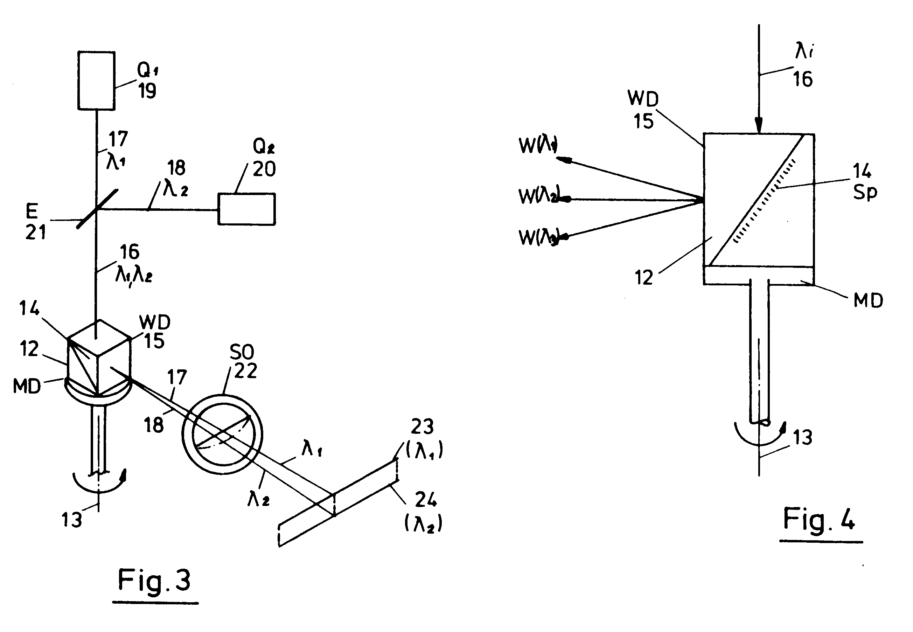

In dem Positionierungssystem nach Fig. 3 wird ein optischmechanischer Ablenker (Deflektor 12) verwendet, der im einzelnen in Fig. 4 dargestellt ist. Der optisch-mechanische Ablenker rotiert um eine ideelle Drehachse 13 und ist durch eine spiegelnde Fläche 14 symbolisiert. Ein Wellenlängendispersives Element 15 ist in dem optisch-mechanischen Ablenker integriert, so daß es mitgedreht wird. Ein Strahlenbündel 16 trifft in Richtung der ideellen Drehachse 13 auf das Wellenlängen-dispersive Element 15 und die spiegelnde Fläche 14, wobei das Strahlenbündel 16 aus zwei Teilstrahlenbündeln 17 und 18 der Lichtquellen 19 und 20, siehe Fig. 3, bestehen kann. Die Teilstrahlenbündel 17 und 18 mit den Wellenlängen $\lambda_1$ und $\lambda_2$ werden durch ein halbdurchlässiges optisches Element 21 zu dem Strahlenbündel 16 vereinigt. Ein Abtastobjektiv 22, siehe Fig. 3, ist im Ausgangsstrahlengang des Wellenlängen-dispersiven Elements 15 zwischen dem Deflektor und einer nicht bezeichneten Bildebene so angeordnet, daß die Bildpunkte in der planen Bildebene positioniert werden. Die Abtastlinien 23 und 24 sind durch das Wellenlängen-dispersive Element 15 hier senkrecht zu der Abtastdrehung versetzt und werden deshalb im wesentlichen parallel verschoben über der Bildebene abgelenkt.

Mit einem solchen Positionierungssystem lassen sich auch bei vorgesehener vorteilhafter 90°-Umlenkung im mechanischen Ablenker oder Deflektor multiple parallele Schreibspuren verwirklichen.

In Fig. 4 ist im einzelnen dargestellt, wie der Austrittswinkel W($\lambda_1$) und W($\lambda_2$) sowie W($\lambda_3$) von den Lichtwellenlängen $\lambda_1$, $\lambda_2$ und $\lambda_3$ abhängen. Die Lichtwellenlängen können dabei von mehreren Lichtquellen ausgehend gleichzeitig in dem Strahlenbündel 16 auftreten oder aber zeitlich nacheinander von nur einer umgesteuerten Lichtquelle emittiert werden.

Das Abtastobjektiv 22 wird vorzugsweise in der Meridionalebene durch das mittels der spiegelnden Fläche 14 um 90° umgelenkte Strahlenbündel 18 der Wellenlänge $\lambda_2$ durchlaufen. Das Strahlenbündel der Wellenlänge $\lambda_1$ geht geringfügig außerhalb der Meridionalebene durch das Abtastobjektiv hindurch.

## Patentansprüche

1. Optisches Positionierungssystem mit mindestens zwei Lichtquellen, die Lichtbündel zur Erzeugung von Bildpunkten (B1,B2) in einer Bildebene aussenden, mit einem wellenlängendispersiven ersten lichtablenkenden Element (2), das von den Lichtbündeln der Lichtquellen gemeinsam beaufschlagt wird und mit dem die Lichtbündel gemäß ihrer Wellenlänge zur Positionierung der Bildpunkte in einer ersten Ablenkrichtung innerhalb eines Ablenkbereichs in der Bildebene ablenkbar sind,
   **dadurch gekennzeichnet,**
   daß die Lichtquellen zur Erzeugung der Bildpunkte schmalbandig sind,
   daß im Strahlengang zwischen den Lichtquellen und der Bildebene ein zweites lichtablenkendes Element (3) angeordnet ist, und daß die Ablenkung des zweiten lichtablenkenden Elements (3) unabhängig von den Wellenlängen der Lichtquellen ist und daß mit dem zweiten lichtablenkenden Element (3) die Lichtbündel zur Positionierung der Bildpunkte in einer zweiten Ablenkrichtung innerhalb eines zweiten Ablenkbereichs in der Bildebene jeweils auf eine nur durch das zweite lichtablenkende Element (3) hervorgerufenen Grundposition abgelenkt werden, daß der Ablenkbereich des ersten lichtablenkenden Elements (2) deutlich kleiner ist als der Ablenkbereich des zweiten lichtablenkenden Elements (3), und
   daß durch die jeweiligen Wellenlängen der Lichtquellen und die Dispersion des ersten lichtablenkenden Elementes (2) die Positionen der einzelnen Bildpunkte innerhalb des Ablenkbereichs des zweiten lichtablenkenden Elements (3) um die jeweilige Grundposition herum einstellbar sind.

2. Optisches Positionierungssystem nach Anspruch 1, dadurch gekennzeichnet, daß die Lichtquellen zur Erzeugung der Bildpunkte in der Wellenlänge steuerbar sind und daß durch gleichzeitige Steuerung der Wellenlängen der Lichtquellen die Positionen der einzelnen Bildpunkte innerhalb des Ablenkbereichs des zweiten lichtablenkenden Elementes um die jeweilige Grundposition herum einstellbar sind.

3. Optisches Positionierungssystem nach Anspruch 1 oder 2, **dadurch gekennzeichnet,**
   daß zusätzlich eine Optik (22) vergeschen ist, welche nach dem zweiten strahlenablenkenden Element (3) angeordnet ist, und daß die Strahlenbündel (18) durch Bewegung dieses zweiten Ablenkers (3) im wesentlichen in einer Meridionalebene der Optik (22) verlaufen.

4. Optisches Positionierungssystem nach einem der Ansprüche 1 - 3,

**dadurch gekennzeichnet,**
daß das wellenlängendispersive Element (15) dergestalt in dem Strahlengang angeordnet ist, daß die ihn beaufschlagenden Strahlenbündel (16) im wesentlichen rechtwinklig zu der zweiten Ablenkrichtung abgelenkt werden.

5. Optisches Positionierungssystem nach einem der Ansprüche 1 - 4,
**dadurch gekennzeichnet,**
daß das zweite lichtablenkende Element (14) mitbewegter Bestandteil eines optisch-mechanischen Ablenkers (12) ist.

6. Optisches Positionierungssystem nach 5,
**dadurch gekennzeichnet,**
daß das zweite lichtablenkende Element (12) ein um eine Drehachse (13) rotierender spiegelnder Deflektor (14) ist, der im wesentlichen in der Rotationsachse von dem Strahlenbündel (16) beaufschlagt wird.

7. Optisches Positionierungssystem nach Anspruch 5 oder 6, **dadurch gekennzeichnet,**
daß das wellenlängendispersive Element (15) mit dem bewegten, insbesondere rotierenden Teil des optischmechanischen Ablenkers (12) fest verbunden ist.

8. Optisches Positionierungssystem nach einem der vorangehenden Ansprüche,
**dadurch gekennzeichnet,**
daß die Lichtquelle einen Laser umfaßt, dessen Wellenlänge einstellbar ist.

9. Optisches Positionierungssystem nach Anspruch 1, dadurch gekennzeichnet, daß zwei Lichtquellen zur Erzeugung konstanter Wellenlängendifferenzen zeitlich in der Wellenlänge konstant sind und daß durch Auswahl der Dispersion des ersten lichtablenkenden Elementes (2) ein gewünschter fester Abstand der beiden Lichtpunkte in der Ablenkrichtung des ersten lichtablenkenden Elementes (2) für jede Grundposition des zweiten lichtablenkenden Elementes (3) aufgrund der zeitlich konstanten Wellenlängendifferenz einstellbar ist.

10. Optisches Positionierungssystem nach einem der vorangehenden Ansprüche,
**dadurch gekennzeichnet,**
daß das wellenlängendispersive erste lichtablenkende Element mindestens eine ebene Gitterstruktur aufweist.

11. Optisches Positionierungssystem nach Anspruch 10,
**dadurch gekennzeichnet,**
daß die Gitterstruktur durch wenigstens ein Hologramm gebildet ist.

12. Optisches Positionierungssystem nach einem der Ansprüche 1 - 9,
**dadurch gekennzeichnet,**
daß das wellenlängendispersive erste lichtablenkende Element aus mindestens einem optischen Element besteht, in welches ein Strahlenbündel außerhalb seiner optischen Achse eindringt.

13. Optisches Positionierungssystem nach einem der Ansprüche 1 - 9,
**dadurch gekennzeichnet,**
daß das wellenlängendispersive erste lichtablenkende Element mindestens eine im wesentlichen plane Grenzfläche zwischen zwei Medien mit unterschiedlichem Brechungsindex aufweist und diese Grenzfläche nicht senkrecht zur Achse eines beaufschlagenden Strahlenbündels orientiert ist.

**Claims**

1. An optical positioning system with at least two light sources, which emit light beams for the production of image points (B1,B2) in an image plane, with a wavelength-dispersive first light-deflecting element (2), which is acted upon jointly by the light beams of the light sources and with which the light beams are able to be deflected according to their wavelength for the positioning of the image points in a first deflection direction within a deflection range in the image plane,
characterised in that

the light sources for the production of the image points are narrow-banded,
that in the path of rays between the light sources and the image plane a second light-deflecting element (3) is arranged, and that the deflection of the second light-deflecting element (3) is independent of the wavelengths of the light sources and that with the second light-deflecting element (3) the light beams for positioning the image points are deflected in a second deflection direction within a second deflection range in the image plane in each case to a basic position brought about only by the second light-deflecting element (3),
that the deflection range of the first light-deflecting element (2) is distinctly smaller than the deflection range of the second light-deflecting element (3), and
that through the respective wavelengths of the light sources and the dispersion of the first light-deflecting element (2) the positions of the individual image points within the deflection range of the second light-deflecting element (3) are adjustable around the respective basic position.

2. An optical positioning system according to Claim 1, characterised in that the light sources for the production of the image points are controllable in wavelength and that through simultaneous controlling of the wavelengths of the light sources, the positions of the individual image points within the deflection range of the second light-deflecting element are adjustable around the respective basic position.

3. An optical positioning system according to Claim 1 or 2, characterised in that an optical system (22) is additionally provided,
which is arranged after the second ray-deflecting element (3), and that the beams (18) run substantially in a meridional plane of the optical system (22) through the movement of this second deflector (3).

4. An optical positioning system according to one of Claims 1- 3,
characterised in that
the wavelength-dispersive element (15) is arranged in the path of rays such that the rays (16) acting upon it are deflected substantially at right-angles to the second deflection direction.

5. An optical positioning system according to one of Claims 1 - 4,
characterised in that
the second light-deflecting element (14) is a comoved component of an optical/mechanical deflector (12).

6. An optical positioning system according to Claim 5,
characterised in that
the second light-deflecting element (12) is a reflecting deflector (14) rotating about a rotation axis (13), which deflector is acted upon by the rays (16) substantially in the rotation axis.

7. An optical positioning system according to Claim 5 or 6,
characterised in that
the wavelength-dispersive element (15) is fixedly connected with the moving, in particular rotating part, of the optical/mechanical deflector (12).

8. An optical positioning system according to one of the preceding claims,
characterised in that
the light source comprises a laser, the wavelength of which is adjustable.

9. An optical positioning system according to Claim 1, characterised in that two light sources for the production of constant wavelength differences are chronologically constant in wavelength and that through the selection of the dispersion of the first light-deflecting element (2) a desired fixed distance of the two light points in the deflection direction of the first light-deflecting element (2) is adjustable for each basic position of the second light-deflecting element (3) owing to the chronologically constant wavelength difference.

10. An optical positioning system according to one of the preceding claims,
characterised in that
the wavelength-dispersive first light-deflecting element has at least one flat grid structure.

11. An optical positioning system according to Claim 10,
characterised in that

EP 0 502 965 B1

the grid structure is formed by at least one hologram.

**12.** An optical positioning system according to one of Claims 1 - 9,
characterised in that
the wavelength-dispersive first light-deflecting element consists of at least one optical element, into which a beam penetrates outside its optical axis.

**13.** An optical positioning system according to one of Claims 1- 9,
characterised in that the wavelength-dispersive first light-deflecting element has at least one substantially flat boundary surface between two media with a different refractive index and this boundary surface is not oriented vertically to the axis of an acting beam.

**Revendications**

1. Système de positionnement optique à au moins deux sources lumineuses émettant des faisceaux lumineux pour créer des points images (B1, B2) dans un plan image avec un premier élément de déflexion de lumière (2) à dispersion de longueur d'onde, qui reçoit en commun les faisceaux lumineux des sources lumineuses et dévie les faisceaux lumineux en fonction de leur longueur d'onde pour positionner les points images dans une première direction de déflexion à l'intérieur d'une plage de déflexion du plan image, système caractérisé en ce que
les sources lumineuses créant les points images sont des sources à bande étroite,
dans le faisceau lumineux entre les sources lumineuses et le plan image, un second élément de déflexion de lumière (3) assure la déflexion (3) indépendante de la longueur d'onde des sources lumineuses et le second élément de déflexion de lumière (3) dévie les faisceaux lumineux pour positionner les points images suivant une seconde direction de déflexion à l'intérieur d'une seconde plage de déflexion du plan image, chaque fois dans une position de base engendrée par le second élément de déflexion de lumière (3), la plage de déflexion du premier élément de déflexion de lumière (2) étant significativement plus petite que la plage de déflexion du second élément de déflexion de lumière (3) et les longueurs d'ondes respectives des sources lumineuses et la dispersion assurée par le premier élément de déflexion de lumière (2) permet de régler les positions des différents points images dans la plage de déflexion du second élément de déflexion de lumière (3) autour de la position de base respective.

2. Système de positionnement optique selon la revendication 1, caractérisé en ce que les sources lumineuses créant les points images sont commandées en longueurs d'ondes et par commande simultanée des longueurs d'ondes des sources lumineuses, on règle les positions des différents points images dans la plage de déflexion du second élément de déflexion de lumière autour de la position de base respective.

3. Système de positionnement optique selon la revendication 1 ou 2, caractérisé en ce qu'il comporte en outre une optique (22) prévue en aval du second élément de déflexion de faisceau (3) et les faisceaux de lumière (18) passent essentiellement dans un plan méridien de l'optique (22) du fait du mouvement du second moyen de déviation (3).

4. Système de positionnement optique selon l'une des revendications 1 à 3, caractérisé en ce que l'élément de dispersion de longueur d'onde (15) est placé dans le chemin du faisceau optique pour que le faisceau lumineux (16) qu'il reçoit soit dévié essentiellement à angle droit par rapport à la seconde direction de déflexion.

5. Système de positionnement optique selon l'une des revendications 1-4, caractérisé en ce que le second élément de déviation de lumière (14) est partie intégrante, mobile, d'un déflecteur optique/mécanique (12).

6. Système de positionnement optique selon la revendication 5, caractérisé en ce que le second élément de déflexion de lumière (12) est un déflecteur (14) à miroir tournant autour d'un axe de rotation (13), ce déflecteur étant sollicité essentiellement par le faisceau lumineux (16) au niveau de l'axe de rotation.

7. Système de positionnement optique selon la revendication 5 ou 6, caractérisé en ce que l'élément de dispersion de longueur d'onde (15) est relié solidairement à une partie mobile, notamment une partie rotative du déflecteur optique/mécanique (12).

9

8. Système de positionnement optique selon l'une des revendications précédentes, caractérisé en ce que la source lumineuse comprend un laser de longueur d'onde réglable.

9. Système de positionnement optique selon la revendication 1, caractérisé en ce que deux sources lumineuses créant des différences de longueurs d'ondes constantes sont constantes en longueurs d'ondes et en ce que, par le choix de la dispersion assurée par le premier élément de déflexion de lumière (2), on règle une distance fixe souhaitée entre les deux points lumineux dans la direction de déflexion du premier élément de déflexion lumineuse (2), pour chaque position de base du second élément de déflexion de lumière (3) grâce à la différence de longueurs d'ondes, constante dans le temps.

10. Système de positionnement optique selon l'une des revendications précédentes, caractérisé en ce que le premier élément de déflexion de lumière à dispersion de longueur d'onde présente au moins une structure de réseau plan.

11. Système de positionnement optique selon la revendication 10, caractérisé en ce que la structure en réseau est formée par au moins un hologramme.

12. Système de positionnement optique selon l'une des revendications 1-9, caractérisé en ce que le premier élément de déflexion de lumière à dispersion de longueur d'onde se compose d'au moins un élément optique pénétrant dans un faisceau lumineux en dehors de son axe optique.

13. Système de positionnement optique selon l'une des revendications 1-9, caractérisé en ce que le premier élément de déflexion de lumière à dispersion de longueur d'onde présente au moins une surface limite essentiellement plane entre deux milieux à indices de réfraction différents et cette surface limite n'est pas perpendiculaire à l'axe du faisceau lumineux incident.

Fig. 1

WD
2

1aλ

λ₁

1b
λᵢ

1

3
MD

λ₂

4

5
SO

B(λ₁)

7

6

B(λ₂)

D          11

λ₁  λ₂  λ₃

B(λ₁)

λ₁

B(λ₂)

Q₁
8

λ₂

B(λ₃)

9

Q₂

λ₃

10

Q₃

Fig. 2

11

EP 0 502 965 B1

Q₁
19

Q₂
20

17
λ₁

18
λ₂

E
21

16
λ₁,λ₂

14

WD
15

12

MD

SO
22

17

18

λ₁

λ₂

13

23
(λ₁)

24
(λ₂)

Fig. 3

λi
16

WD
15

W(λ₁)

W(λ₂)

W(λ₃)

14
Sp

12

MD

13

Fig. 4